(19) Europäisches Patentamt
European Patent Office
Office européen des brevets

(11) **EP 3 886 305 A1**

(12) **EUROPÄISCHE PATENTANMELDUNG**

(43) Veröffentlichungstag:
**29.09.2021 Patentblatt 2021/39**

(51) Int Cl.:
*H02M 1/42* (2007.01)       *H02M 3/156* (2006.01)
*H02M 3/158* (2006.01)       *H02M 7/48* (2007.01)
*H02M 1/00* (2006.01)

(21) Anmeldenummer: **20165328.4**

(22) Anmeldetag: **24.03.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **FRONIUS INTERNATIONAL GmbH**
**4643 Pettenbach (AT)**

(72) Erfinder:
• **GRASBÖCK, Richard**
  **4643 Pettenbach (AT)**
• **METZNER, Wolfgang**
  **4643 Pettenbach (AT)**
• **RITZBERGER, Gerald**
  **4643 Pettenbach (AT)**
• **WIESER, Stefan**
  **4643 Pettenbach (AT)**

(74) Vertreter: **SONN Patentanwälte OG**
**Riemergasse 14**
**1010 Wien (AT)**

(54) **VERFAHREN ZUM BETREIBEN EINES WECHSELRICHTERS UND WECHSELRICHTER ZUR DURCHFÜHRUNG DES VERFAHRENS**

(57) Die Erfindung betrifft ein Verfahren zum Betreiben eines Wechselrichters (1) zur Umwandlung einer Gleichspannung ($U_{DC}$) in eine Wechselspannung ($U_{AC}$), mit zumindest einem durch einen Aufwärtswandler (2) gebildeten DC/DC-Wandler zur Umwandlung einer am DC-Eingang (3) des Aufwärtswandlers (2) anliegenden Eingangsspannung ($U_{IN}$) einer DC-Quelle (4) in eine um einen Spannungshub ($v=U_{OUT}/U_{IN}$) höhere Ausgangsspannung ($U_{OUT}$), einem Zwischenkreis (5), einem DC/AC-Wandler (6) und einem AC-Ausgang (8) zur Verbindung mit einem Versorgungsnetz (9) und/oder Verbrauchern (10), wodurch der Zwischenkreisspannung ($U_{ZK}$) ein Spannungsrippel ($\Delta U_{ZK}$) überlagert wird, wobei in jedem Aufwärtswandler (2) ein Schalter (12) mit einer bestimmten Schaltfrequenz ($f_S$) und einem bestimmten Tastverhältnis (D) ein- und ausgeschaltet wird, sodass die Ausgangsspannung ($U_{OUT}$) jedes Aufwärtswandlers (2) einem Sollwert der Zwischenkreisspannung ($U_{ZK\_soll}$) entspricht, sowie einen Wechselrichter (1) zur Durchführung dieses Verfahrens. Erfindungsgemäß wird die Eingangsspannung ($U_{IN}$) jedes Aufwärtswandlers (2) und die Zwischenkreisspannung ($U_{ZK}$) samt Spannungsrippel ($\Delta U_{ZK}$) gemessen, und ein minimaler Spannungshub (v) jedes Aufwärtswandlers (2) in Abhängigkeit der gemessenen Eingangsspannung ($U_{IN}$) und des Spannungsrippels ($\Delta U_{ZK}$) dynamisch berechnet und der Sollwert der Zwischenkreisspannung ($U_{ZK\_soll}$) minimiert.

FIG. 5

**Beschreibung**

Die Erfindung betrifft ein Verfahren zum Betreiben eines Wechselrichters zur Umwandlung einer Gleichspannung in eine Wechselspannung, mit zumindest einem durch einen Aufwärtswandler gebildeten DC/DC-Wandler zur Umwandlung einer am DC-Eingang des Aufwärtswandlers anliegenden Eingangsspannung einer DC-Quelle in eine um einen Spannungshub höhere Ausgangsspannung, einem mit den Ausgangsspannungen aller Aufwärtswandler gespeisten Zwischenkreis mit einem Zwischenkreiskondensator, einem DC/AC-Wandler und einem AC-Ausgang zur Verbindung mit einem Versorgungsnetz und bzw. oder Verbrauchern, wodurch der Zwischenkreisspannung am Zwischenkreiskondensator ein Spannungsrippel überlagert wird, wobei in jedem Aufwärtswandler mit zumindest einer Drossel, einem Schalter, einer Diode und einem Ausgangskondensator der Schalter über eine Steuereinrichtung mit einer bestimmten Schaltfrequenz und einem bestimmten Tastverhältnis ein- und ausgeschaltet wird, sodass die Ausgangsspannung jedes Aufwärtswandlers einem zwischen einer maximalen Zwischenkreisspannung und einer minimalen Zwischenkreisspannung liegenden Sollwert der Zwischenkreisspannung entspricht.

Ebenso betrifft die Erfindung einen Wechselrichter zur Umwandlung einer Gleichspannung in eine Wechselspannung, mit zumindest einem durch einen Aufwärtswandler gebildeten DC/DC-Wandler zur Umwandlung einer am DC-Eingang des Aufwärtswandlers anliegenden Eingangsspannung einer DC-Quelle in eine um einen Spannungshub höhere Ausgangsspannung, einem mit den Ausgangsspannungen aller Aufwärtswandler gespeisten Zwischenkreis mit einem Zwischenkreiskondensator, einem DC/AC-Wandler und einem AC-Ausgang zur Verbindung mit einem Versorgungsnetz und bzw. oder Verbrauchern, wodurch der Zwischenkreisspannung am Zwischenkreiskondensator ein Spannungsrippel überlagerbar ist, wobei jeder Aufwärtswandler eine Drossel, einen Schalter, eine Diode und einen Ausgangskondensator aufweist, und mit einer Steuereinrichtung, die zum Ein- und Ausschalten des Schalters jedes Aufwärtswandlers mit einer bestimmten Schaltfrequenz und einem bestimmten Tastverhältnis ausgebildet ist, sodass die Ausgangsspannung jedes Aufwärtswandlers einem zwischen einer maximalen Zwischenkreisspannung und einer minimalen Zwischenkreisspannung liegenden Sollwert der Zwischenkreisspannung entspricht.

Die Erfindung bezieht sich auf Wechselrichter, die zur Umwandlung der Gleichspannung verschiedener Gleichspannungsquellen bzw. DC-Quellen, wie Photovoltaik-Modulen, Windgeneratoren, Batterien, etc. in eine geeignete Wechselspannung zur Einspeisung in ein Versorgungsnetz und bzw. oder zur Versorgung von Verbrauchern mit elektrischer Energie, dienen. Üblicherweise sind die im Wechselrichter angeordneten DC/DC-Wandler durch sogenannte Aufwärtswandler, Hochsetzsteller bzw. Booster gebildet, welche die Eingangsspannung der jeweiligen DC-Quelle in eine höhere Ausgangsspannung umwandeln, welche den Zwischenkreis des Wechselrichters speisen. Der Faktor, um welchen die Ausgangsspannung höher ist, wie die Eingangsspannung, wird Spannungshub bezeichnet. Der Aufwärtswandler beinhaltet neben einer Drossel, einer Diode und einem Ausgangskondensator einen Schalter, der über eine Steuereinrichtung mit einer bestimmten Schaltfrequenz und einem bestimmten Tastverhältnis ein- und ausgeschaltet wird, sodass die Eingangsspannung entsprechend dem gewünschten Spannungshub in eine entsprechende Ausgangsspannung umgewandelt werden kann. Je nach gewünschter Zwischenkreisspannung im Wechselrichter wird normalerweise mit fixem Spannungshub gearbeitet. Wenn die Zwischenkreisspannung nicht dem gewünschten Wert entspricht, also unterhalb oder oberhalb des Sollwerts liegt, wird der Aufwärtswandler deaktiviert. Für die Zwischenkreisspannung existiert üblicherweise ein zulässiger Bereich zwischen einer maximalen Zwischenkreisspannung und einer minimalen Zwischenkreisspannung. Bei Überschreitung der maximalen Zwischenkreisspannung wird der Aufwärtswandler deaktiviert, um den Zwischenkreiskondensator zu schützen. Bei Unterschreitung der minimalen Zwischenkreisspannung erfolgt ebenfalls eine Deaktivierung der Aufwärtswandler, um einen Stromfluss vom Versorgungsnetz in den DC/AC-Wandler zu verhindern.

Üblicherweise arbeiten die Aufwärtswandler des Wechselrichters mit einem fixen Spannungshub. Im Falle eines größeren Eingangsspannungsbereichs des Wechselrichters werden daher die Grenzen der Zwischenkreisspannung relativ rasch erreicht und es muss der jeweiligen Aufwärtswandler deaktiviert werden, wodurch der Aufwärtswandler nur in einem kleinen Arbeitsbereich betrieben werden kann. Gesamt gesehen resultiert dadurch kein optimaler Wirkungsgrad für den Wechselrichter.

Dazu kommt, dass durch die Einspeisung der vom Wechselrichter erzeugten Wechselspannung in das Versorgungsnetz oder das Versorgen von Verbrauchern mit elektrischer Energie der Zwischenkreisspannung ein Wechselspannungsanteil, ein sogenannter Spannungsrippel, mit der doppelten Netzfrequenz überlagert wird. Somit schwankt die Zwischenkreisspannung mit der doppelten Netzfrequenz entsprechend der Amplitude des Spannungsrippels in Abhängigkeit der Leistungseinspeisung in das Versorgungsnetz oder die Verbraucher. Dadurch werden bei einem fixen Spannungshub der Aufwärtswandler des Wechselrichters die Grenzen der Zwischenkreisspannung noch rascher erreicht, wodurch keine optimale Ausnützung des Aufwärtswandlers und somit ein schlechterer Wirkungsgrad des Wechselrichters resultiert.

Beispielsweise beschreibt die EP 2 375 552 A1 ein Verfahren zum Betreiben eines Wechselrichters, wobei die Zwischenkreisspannung für eine Optimierung des Wirkungsgrades auf einen möglichst niedrigen Wert eingestellt wird.

Die Aufgabe der vorliegenden Erfindung besteht in der Schaffung eines Verfahrens zum Betreiben eines Wechselrichters und eines Wechselrichters zur Durchführung des Verfahrens, womit der Eingangsspannungsbereich besser ausgenützt und der Wirkungsgrad des Wechselrichters noch weiter optimiert werden kann. Nachteile des Standes der Technik sollen vermieden oder zumindest reduziert werden.

Diese Aufgabe wird in verfahrensmäßiger Hinsicht dadurch gelöst, dass die Eingangsspannung jedes Aufwärtswandlers und die Zwischenkreisspannung samt Spannungsrippel gemessen wird, und ein minimaler Spannungshub jedes Aufwärtswandlers in Abhängigkeit der gemessenen Eingangsspannung und des Spannungsrippels dynamisch berechnet und der Sollwert der Zwischenkreisspannung minimiert wird. Durch die laufende Erfassung der Eingangsspannung jedes Aufwärtswandlers und die Messung der Zwischenkreisspannung samt Spannungsrippel kann der minimale Spannungshub, mit dem der Aufwärtswandler die Eingangsspannung erhöht, und damit die Ausgangsspannung als Sollwert der Zwischenkreisspannung laufend, also dynamisch angepasst werden. Dadurch kann eine bessere Ausnützung jedes Aufwärtswandlers des Wechselrichters stattfinden, da durch die Minimierung des Spannungshubs und des Sollwerts der Zwischenkreisspannung der jeweilige Aufwärtswandler mit einem größeren Eingangsspannungsbereich betrieben werden kann. Durch die dynamische Berechnung des Spannungshubs resultiert ein besserer Wirkungsgrad des Wechselrichters. Die Implementierung des Verfahrens ist relativ einfach und kostengünstig möglich.

Gemäß einem weiteren Merkmal der Erfindung wird der Schalter jedes Aufwärtswandlers über die Steuereinrichtung unter Berücksichtigung eines vorgegebenen minimalen Tastverhältnisses mit der bestimmten Schaltfrequenz und dem bestimmten Tastverhältnis ein- und ausgeschaltet. Das zu berücksichtigende minimale Tastverhältnis des Aufwärtswandlers ist durch die Hardware des Aufwärtswandlers, insbesondere die parasitären Kapazitäten des Schalters, bedingt.

Vorteilhafterweise wird der Spannungshub jedes Aufwärtswandlers nach der Gleichung

$$v = 1/(1-D_{min}) + \Delta U_{ZK}/2 \cdot U_{IN}$$

dynamisch berechnet, worin v den Spannungshub, $D_{min}$ das minimale Tastverhältnis des Aufwärtswandlers, $\Delta U_{ZK}$ den Spannungsrippel und $U_{IN}$ die Eingangsspannung des Aufwärtswandlers bezeichnen. Durch diesen einfachen Zusammenhang resultiert eine optimale Ausnützung des Aufwärtswandlers bei gleichzeitig geringem Rechenaufwand für die laufende Ermittlung des Spannungshubs und somit die Festlegung des Sollwerts der Zwischenkreisspannung des Wechselrichters.

Wenn der berechnete Spannungshub jedes Aufwärtswandlers um einen definierten Wert erhöht wird, kann eine Reglerreserve berücksichtigt werden. Die Reglerreserve kann ein bestimmter Absolutwert des Spannungshubs oder ein Relativwert, also ein gewisser Prozentsatz des Spannungshubs, beispielsweise 2%, sein. Durch das Vorsehen einer solchen Reglerreserve kann die Regelbarkeit jedes Aufwärtswandlers gewährleistet werden.

Gemäß einem weiteren Merkmal der Erfindung wird der Eingangsstrom jedes Aufwärtswandlers gemessen, und das minimale Tastverhältnis des Schalters jedes Aufwärtswandlers in Abhängigkeit des gemessenen Eingangsstromes geändert. Je nach Größe des Eingangsstroms des Aufwärtswandlers wird die minimale Schaltzeit des Schalters aufgrund seiner parasitären Kapazität verändert. Bei einem kleineren Eingangsstrom muss das minimale Tastverhältnis des Aufwärtswandlers angehoben werden, wohingegen bei höherem Eingangsstrom eine Absenkung des minimalen Tastverhältnisses stattfinden muss. Somit kann in bestimmten Fällen, beispielsweise in den Morgenstunden bei einem Photovoltaik-Modul als DC-Quelle mit einem geringeren Eingangsstrom eine optimale Anpassung des Spannungshubs des Aufwärtswandlers durch Anpassung des minimalen Tastverhältnisses erfolgen.

Vorzugsweise wird die Eingangsspannung jedes Aufwärtswandlers und die Zwischenkreisspannung samt Spannungsrippel und allenfalls der Strom durch die Drossel mit einer Abtastfrequenz, welche einem Vielfachen der Netzfrequenz der Wechselspannung entspricht, gemessen und daraus der Spannungshub und allenfalls das minimale Tastverhältnis berechnet. Durch eine ausreichend hohe Abtastfrequenz, beispielsweise oberhalb 1 kHz, kann eine optimale Erfassung des Spannungsrippels der Zwischenkreisspannung und somit eine quasi-kontinuierliche dynamische Berechnung des Spannungshubs erreicht werden.

Wenn jeder Aufwärtswandler bidirektional ausgeführt ist, kann dieser auch als Abwärtswandler zur Umwandlung der Ausgangsspannung in eine kleinere Eingangsspannung verwendet werden. In diesem Fall kann der Wechselrichter auch in umgekehrter Richtung verwendet werden, um beispielsweise am Eingang befindliche Batterien vom Versorgungsnetz laden zu können. Auch in diesem Fall findet eine dynamische Berechnung des umgekehrten Spannungshubs bei den Abwärtswandlern als DC/DC-Wandler statt.

Gelöst wird die erfindungsgemäße Aufgabe auch durch einen oben genannten Wechselrichter, wobei eine Spannungsmesseinrichtung zur Messung der Eingangsspannung jedes Aufwärtswandlers und eine Spannungsmesseinrichtung zur Messung der Zwischenkreisspannung samt Spannungsrippel vorgesehen ist, und die Steuereinrichtung zur dynamischen Berechnung eines minimalen Spannungshubs jedes Aufwärtswandlers in Abhängigkeit der gemessenen Eingangsspannung und des gemessenen Spannungsrippels und zur Minimierung des Sollwerts der Zwischenkreisspannung ausgebildet ist. Zu den dadurch erzielbaren Vorteilen wird auf die obige Beschreibung des Verfahrens zum Betreiben des Wechselrichters verwiesen. Da die für die Messung der Eingangsspannung und der Zwischenkreisspannung samt Spannungsrippel notwendigen Einrichtungen üblicherweise in einem Wechselrichter ohnedies vorhanden sind, hält sich der Hardware-technische Aufwand für die Realisierung der Erfindung in Grenzen. Die Verarbeitung der Messwerte und die Berechnung des Spannungshubs und Regelung der Aufwärtswandler des Wechselrichters geschieht üblicherweise softwaremäßig in der Steuereinrichtung des Wechselrichters. Allenfalls muss die Rechenleistung der Steuereinrichtung entsprechend erhöht werden, um die Verarbeitung der Messwerte in der gewünschten Geschwindigkeit und Auflösung zu ermöglichen.

Gemäß einem weiteren Merkmal ist die Steuereinrichtung zum Ein- und Ausschalten des Schalters jedes Aufwärtswandlers mit der bestimmten Schaltfrequenz und dem bestimmten Tastverhältnis unter Berücksichtigung eines vorgegebenen minimalen Tastverhältnisses ausgebildet. Wie bereits oben erwähnt, ist das minimale Tastverhältnis des Aufwärtswandlers durch die Hardware des Aufwärtswandlers, insbesondere die parasitären Kapazitäten des Schalters, verursacht.

Die Steuereinrichtung ist vorzugsweise zur dynamischen Berechnung des Spannungshubs jedes Aufwärtswandlers nach der Gleichung

$$v = 1/(1-D_{min}) + \Delta U_{ZK}/2.U_{IN}$$

ausgebildet. Wie bereits oben beschrieben, stellt dies eine einfach implementierbare Berechnung des minimalen Spannungshubs und somit des minimalen Sollwerts der Zwischenkreisspannung des Wechselrichters dar.

Wenn die Steuereinrichtung zur Erhöhung des berechneten Spannungshubs jedes Aufwärtswandlers um einen definierten Wert ausgebildet ist, kann eine Reglerreserve berücksichtigt und die Regelbarkeit des Aufwärtswandlers gewährleistet werden.

Gemäß einem weiteren Merkmal der Erfindung ist eine Strommesseinrichtung zur Messung des Eingangsstroms jedes Aufwärtswandlers vorgesehen, und die Steuereinrichtung zur Änderung des minimalen Tastverhältnisses des Schalters jedes Aufwärtswandlers in Abhängigkeit des gemessenen Eingangsstromes ausgebildet. Wie bereits oben erwähnt, kann dadurch eine Anpassung des minimalen Tastverhältnisses des Aufwärtswandlers und eine noch bessere Ausnützung des Eingangsspannungsbereichs des Aufwärtswandlers und somit Erhöhung des Wirkungsgrades erreicht werden.

Die Spannungsmesseinrichtung ist vorzugsweise zur Messung der Eingangsspannung jedes Aufwärtswandlers, die Spannungsmesseinrichtung zur Messung der Zwischenkreisspannung samt Spannungsrippel und allenfalls die Strommesseinrichtung zur Messung des Eingangsstroms jedes Aufwärtswandlers zur Erfassung von Messwerten mit einer Abtastfrequenz, welche einem Vielfachen der Netzfrequenz der Wechselspannung entspricht, und daraus zur Berechnung des Spannungshubs und allenfalls des minimalen Tastverhältnisses ausgebildet.

Die DC-Quelle kann beispielsweise durch ein Photovoltaik-Modul, einen Windgenerator und bzw. oder eine Batterie gebildet sein. Es können auch verschiedene DC-Quellen an einem Aufwärtswandler oder an jeweils eigenen Aufwärtswandlern angeschlossen sein.

Wenn jeder Aufwärtswandler bidirektional ausgeführt ist, kann dieser auch in umgekehrter Richtung zur Abwärtswandlung der DC-Spannung am Zwischenkreis in eine kleinere Spannung am DC-Eingang eingesetzt werden. Wie bereits oben erwähnt, kann hier der Wechselrichter auch in umgekehrter Richtung verwendet werden, um beispielsweise am Eingang befindliche Batterien vom Versorgungsnetz laden zu können, wobei auch hier eine dynamische Berechnung des umgekehrten Spannungshubs bei den Abwärtswandlern stattfindet.

Die Erfindung wird anhand der beigefügten Figuren näher erläutert. Darin zeigen:

Fig. 1 ein Blockschaltbild eines Wechselrichters mit mehreren als Aufwärtswandler ausgebildeten DC/DC-Wandlern;

Fig. 2 ein vereinfachtes Schaltbild eines Aufwärtswandlers als DC/DC-Wandler eines Wechselrichters;

Fig. 3 den resultierenden Spannungshub v eines Aufwärtswandlers nach dem erfindungsgemäßen Verfahren, wobei der Zwischenkreisspannung $U_{ZK}$ ein Spannungsrippel $\Delta U_{ZK}$ überlagert ist;

Fig. 4 den resultierenden Spannungshub v eines Aufwärtswandlers nach dem Stand der Technik bei drei verschiedenen Größen des Spannungsrippels $\Delta U_{ZK}$ der Zwischenkreisspannung $U_{ZK}$;

Fig. 5 den resultierenden Spannungshub v eines Aufwärtswandlers nach dem erfindungsgemäßen Verfahren bei drei verschiedenen Größen des Spannungsrippels $\Delta U_{ZK}$ der Zwischenkreisspannung $U_{ZK}$;

Fig. 6 schematisch das minimale Tastverhältnis $D_{min}$ eines Aufwärtswandlers in Abhängigkeit des Eingangsstromes $I_{DC}$ beim Stand der Technik; und

Fig. 7 schematisch das minimale Tastverhältnis $D_{min}$ eines Aufwärtswandlers in Abhängigkeit des Eingangsstromes $I_{DC}$ beim erfindungsgemäßen Verfahren.

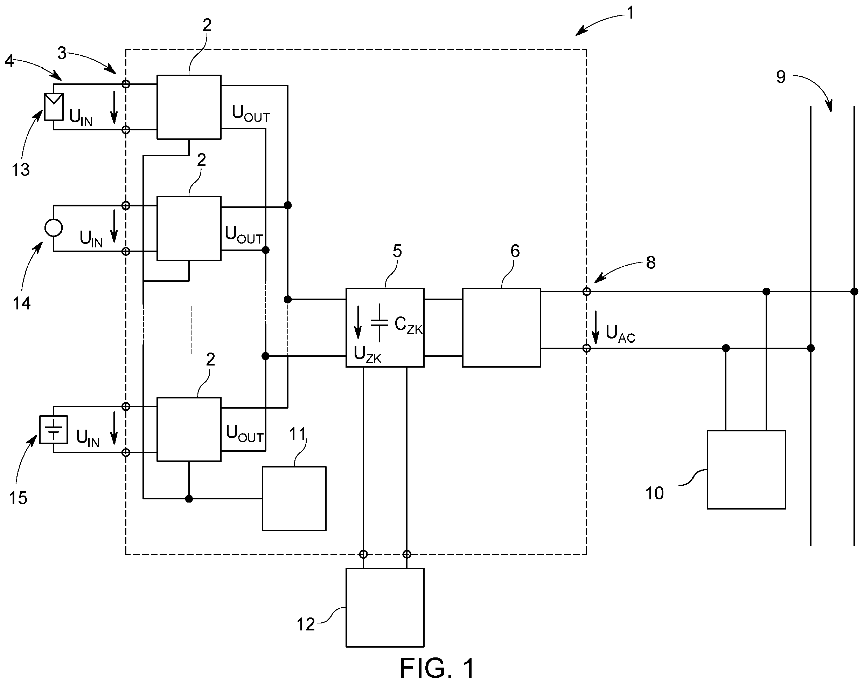

Fig. 1 zeigt ein Blockschaltbild eines Wechselrichters 1 mit mehreren als Aufwärtswandler 2 ausgebildeten DC/DC-Wandlern. Der Wechselrichter 1 beinhaltet zumindest einen DC-Eingang 3 zur Verbindung mit zumindest einer DC-Quelle 4. An jedem DC-Eingang 3 ist ein DC/DC-Wandler angeordnet, der als Booster oder Aufwärtswandler 2 bzw. Hochsetzsteller ausgebildet ist. Der Aufwärtswandler 2 wandelt die am DC-Eingang 3 anliegende Eingangsspannung $U_{IN}$ der jeweiligen DC-Quelle 4 in eine um einen Spannungshub $v=U_{OUT}/U_{IN}$ höhere Ausgangsspannung $U_{OUT}$ um. Ein Zwischenkreis 5 mit einem Zwischenkreiskondensator $C_{ZK}$ wird von den Ausgangsspannungen $U_{OUT}$ aller Aufwärtswandler 2 gespeist. Nach dem Zwischenkreis 5 folgt ein DC/AC-Wandler 6 zur Umwandlung der Zwischenkreisspannung $U_{ZK}$ in eine gewünschte Wechselspannung $U_{Ac}$. Der AC-Ausgang 8 ist mit einem Versorgungsnetz 9 und bzw. oder Verbrauchern 10 verbunden. Über eine Steuereinrichtung 11 werden die verschiedenen Komponenten des Wechselrichters 1 gesteuert bzw. geregelt.

Beim Wechselrichter 1 handelt es sich beispielsweise um einen Photovoltaik-Wechselrichter einer Photovoltaik-Anlage zur Umwandlung der von Photovoltaik-Modulen 13 als DC-Quellen 4 erzeugten Gleichspannung $U_{DC}$ in eine entsprechende Wechselspannung $U_{AC}$, welche in ein Versorgungsnetz 9 eingespeist oder zur Versorgung von Verbrauchern 10 mit elektrischer Energie verwendet wird. Als DC-Quelle 4 kommen beispielsweise auch Windgeneratoren 14, Batterien 15 oder andere Quellen in Frage.

Am Zwischenkreis 5 des Wechselrichters 1 kann auch zumindest ein Energiespeicher 12 angeschlossen sein, welcher zur temporären Speicherung elektrischer Energie verwendet werden kann. Solche Wechselrichter 1 werden als Hybrid-Wechselrichter bezeichnet. Energiespeicher 12 werden üblicherweise über einen Batterietrenner (nicht dargestellt) mit dem Wechselrichter 1 verbunden, und bei Bedarf zugeschaltet.

Üblicherweise arbeiten die Aufwärtswandler 2 mit einem fixen Spannungshub v. Entsprechend der Eingangsspannung $U_{IN}$ und dem jeweiligen Spannungshub v resultiert eine entsprechende Ausgangsspannung $U_{OUT}$, welche innerhalb der vorgegebenen Grenzen der Zwischenkreisspannung $U_{ZK}$, also zwischen der maximalen Zwischenkreisspannung $U_{ZK\_max}$ und der minimalen Zwischenkreisspannung $U_{ZK\_min}$ liegen muss. Durch die Leistungsentnahme am AC-Ausgang 8 des Wechselrichters 1 kommt es zu Schwankungen der Zwischenkreisspannung $U_{ZK}$ in Form eines überlagerten Spannungsrippels $\Delta U_{ZK}$. Dies schränkt den Arbeitsbereich des jeweiligen Aufwärtswandlers 2 bei einem fixen Spannungshub v neben dem zulässigen Bereich für die Zwischenkreisspannung $U_{ZK}$ zwischen der maximalen Zwischenkreisspannung $U_{ZK\_max}$ und der minimalen Zwischenkreisspannung $U_{ZK\_min}$ noch weiter ein. Erfindungsgemäß ist daher vorgesehen, dass der Spannungshub v unter Berücksichtigung der Eingangsspannung $U_{IN}$ des jeweiligen Aufwärtswandlers 2 und der Zwischenkreisspannung $U_{ZK}$ samt Spannungsrippel $\Delta U_{ZK}$ laufend bzw. dynamisch berechnet und entsprechend angepasst wird. Somit kann der Spannungshub v jeweils möglichst gering gehalten werden (minimaler Spannungshub) und somit ein entsprechend geringer bzw. minimierter Wert des Sollwerts der Zwischenkreisspannung $U_{ZK\_soll}$ erzielt werden. Dadurch resultiert eine bessere Ausnützung des Aufwärtswandlers 2, es kann also der Aufwärtswandler 2 in einem größeren Arbeitsbereich betrieben werden. In der Folge kann der Wirkungsgrad des Wechselrichters 1 entsprechend optimiert werden.

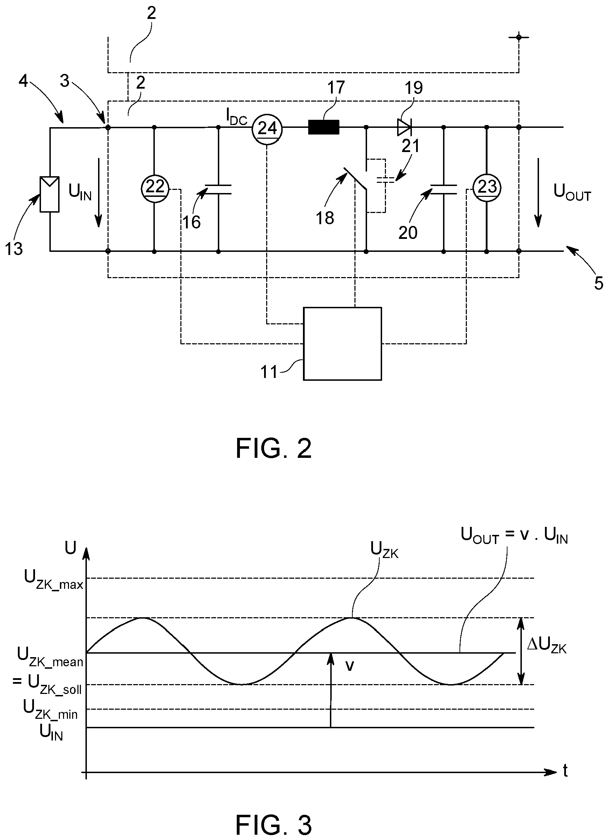

Fig. 2 zeigt ein vereinfachtes Schaltbild eines Aufwärtswandlers 2 als DC/DC-Wandler eines Wechselrichters 1. Der Aufwärtswandler 2 weist zumindest eine Drossel 17, einen Schalter 18, eine Diode 19 und einen Ausgangskondensator 20 auf. Der Schalter 18 ist durch einen Halbleiterschalter gebildet und weist eine gewisse parasitäre Kapazität 21 auf. Weiters ist im Ersatzschaltbild des Aufwärtswandlers 2 ein Eingangskondensator 16 dargestellt. Über die Steuereinrichtung 11 wird der Schalter 18 mit einer bestimmten Schaltfrequenz $f_s$ und einem bestimmten Tastverhältnis D ein- und ausgeschaltet, sodass eine gewünschte Ausgangsspannung $U_{OUT}$ resultiert. Die Ausgangsspannung $U_{OUT}$ ist um den Spannungshub v größer als die Eingangsspannung $U_{IN}$. Die Ausgangsspannung $U_{OUT}$, welche dem Sollwert der Zwischenkreisspannung $U_{ZK\_soll}$ entspricht, muss sich innerhalb bestimmter Grenzen zwischen einer maximalen Zwischenkreisspannung $U_{ZK\_max}$ und einer minimalen Zwischenkreisspannung $U_{ZK\_min}$ befinden. Wird eine der beiden Grenzen erreicht, wird der jeweilige Aufwärtswandler 2 deaktiviert und die am DC-Eingang 3 des deaktivierten Aufwärtswandlers 2 angeschlossene DC-Quelle 4, beispielsweise ein Photovoltaik-Modul, kann dann unter Umständen keinen Beitrag zur Einspeisung von Energie in das Versorgungsnetz 9 oder zur Versorgung der Verbraucher 10 mit elektrischer Energie beitragen. Üblicherweise sind mehrere Aufwärtswandler 2 parallel geschaltet und am selben Zwischenkreis 5 angeschlossen. Es kann aber auch nur ein Aufwärtswandler 2 zur Umwandlung der Eingangsspannung $U_{IN}$ einer DC-Quelle 4 vorgesehen sein.

Erfindungsgemäß ist eine Spannungsmesseinrichtung 22 zur Messung der Eingangsspannung $U_{IN}$ jedes Aufwärtswandlers 2 und eine Spannungsmesseinrichtung 23 zur Messung der Zwischenkreisspannung $U_{ZK}$ samt Spannungsrippel $\Delta U_{ZK}$ vorgesehen und mit der Steuereinrichtung 11 verbunden. In der Steuereinrichtung 11 erfolgt eine Verarbeitung der Messwerte und eine dynamischen Berechnung eines minimalen Spannungshubs v für jeden Aufwärtswandlers 2 in Abhängigkeit der gemessenen Eingangsspannung $U_{IN}$ und des gemessenen Spannungsrippels $\Delta U_{ZK}$ zur Minimierung des Sollwerts der Zwischenkreisspannung $U_{ZK\_soll}$. Dadurch kann eine optimale Ausnützung des Arbeitsbereichs des jeweiligen Aufwärtswandlers 2 auch bei schwankenden Eingangsspannungen $U_{IN}$ erzielt werden. Vorteilhafterweise erfolgt die Berechnung des minimalen Spannungshubs v jedes Aufwärtswandlers 2 nach der Gleichung $v = 1/(1-D_{min}) + \Delta U_{ZK}/ 2 \cdot U_{IN}$, worin v den Spannungshub, $D_{min}$ das minimale Tastverhältnis des Aufwärtswandlers 2, $\Delta U_{ZK}$ den Spannungsrippel und $U_{IN}$ die Eingangsspannung des Aufwärtswandlers 2 bezeichnen.

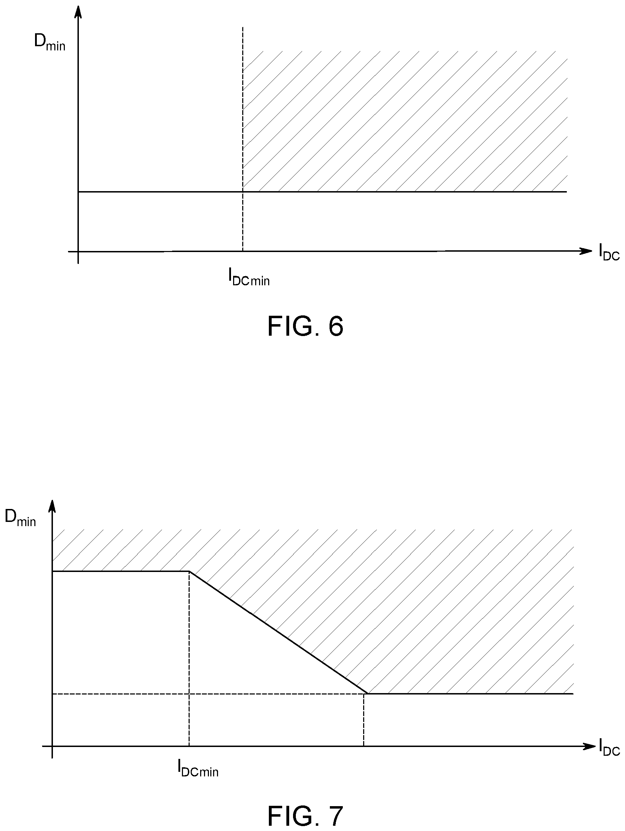

Zusätzlich kann eine Strommesseinrichtung 24 zur Messung des Eingangsstroms $I_{DC}$ des Aufwärtswandlers 2 vorgesehen sein und die Steuereinrichtung 11 zur Änderung des minimalen Tastverhältnisses $D_{min}$ des Schalters 18 jedes Aufwärtswandlers 2 in Abhängigkeit des gemessenen Eingangsstromes $I_{DC}$ ausgebildet sein. Dadurch kann bei kleineren Eingangsströmen $I_{DC}$ die untere Grenze für das Tastverhältnis des Schalters 18 etwas erhöht werden, und auch in diesem Fall ein Betrieb des Aufwärtswandlers 2 mit etwas höherem Spannungshub v gewährleistet werden. (siehe Beschreibung der Figuren 6 und 7).

Fig. 3 zeigt den resultierenden Spannungshub v eines Aufwärtswandlers 2 nach dem erfindungsgemäßen Verfahren, wobei der Zwischenkreisspannung $U_{ZK}$ ein Spannungsrippel $\Delta U_{ZK}$ überlagert ist. Die Figur zeigt den zeitlichen Verlauf der im Wesentlichen konstanten Eingangsspannung $U_{IN}$ und der Zwischenkreisspannung $U_{ZK}$ mit dem überlagertem Spannungsrippel $\Delta U_{ZK}$, wobei die Grenzen des zulässigen Bereichs der Zwischenkreisspannung $U_{ZK}$ in Form der maximalen Zwischenkreisspannung $U_{ZK\_max}$ und der minimalen Zwischenkreisspannung $U_{ZK\_min}$ strichliert eingezeichnet sind. Der minimale Spannungshub v wird bei der gemessenen Eingangsspannung $U_{IN}$ des Aufwärtswandlers 2 und dem gemessenen Spannungsrippel $\Delta U_{ZK}$ so berechnet, dass aus der Eingangsspannung $U_{IN}$ multipliziert mit dem Spannungshub v der Mittelwert $U_{ZK\_mean}$ der Zwischenkreisspannung $U_{ZK}$ resultiert, welcher auch dem Regelsollwert $U_{ZK\_soll}$ der Zwischenkreisspannung $U_{ZK}$ entspricht. Dem Mittelwert $U_{ZK\_mean}$ der Zwischenkreisspannung $U_{ZK}$ ist der Spannungsrippel $\Delta U_{ZK}$ überlagert. Die Ausgangsspannung $U_{OUT}$ des Aufwärtswandlers 2 und der Mittelwert $U_{ZK\_mean}$ der Zwischenkreisspannung $U_{ZK}$ entsprechen dem selben Wert.

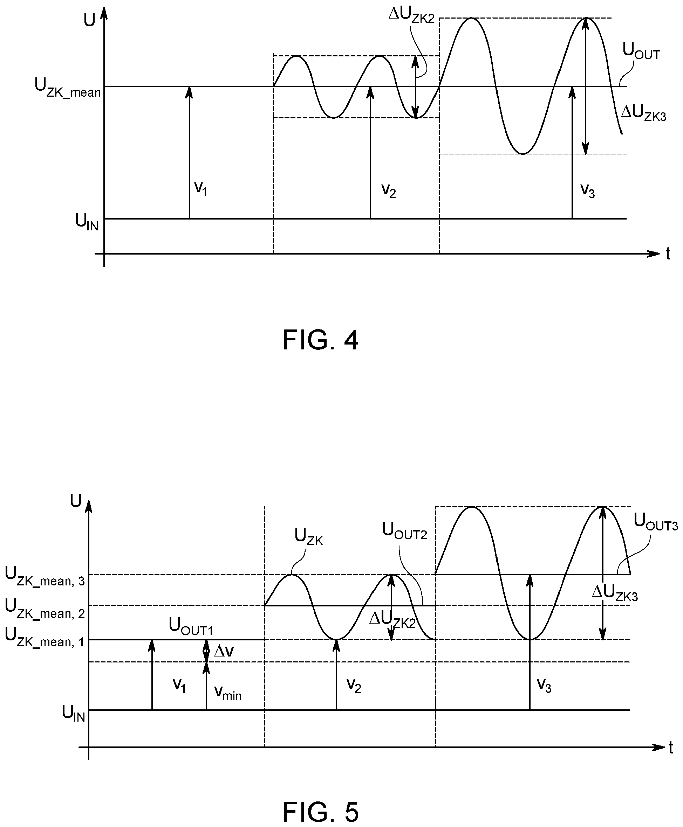

Fig. 4 zeigt den resultierenden Spannungshub v eines Aufwärtswandlers nach dem Stand der Technik bei drei verschiedenen Größen des Spannungsrippels $\Delta U_{ZK}$ der Zwischenkreisspannung $U_{ZK}$. Die Grenzen des zulässigen Bereichs der Zwischenkreisspannung $U_{ZK}$ in Form der maximalen Zwischenkreisspannung $U_{ZK\_max}$ und der minimalen Zwischenkreisspannung $U_{ZK\_min}$ (siehe Fig. 3) sind hier der besseren Übersicht halber nicht eingezeichnet. Im linken Teil des zeitlichen Verlaufs der Spannungen ist der Fall eingezeichnet, bei dem der Zwischenkreisspannung $U_{ZK}$ kein Spannungsrippel $\Delta U_{ZK}$ überlagert ist. Dies ist beispielsweise dann der Fall, wenn ein Energiespeicher 12 des Wechselrichters 1 von den Photovoltaik-Modulen 13 als DC-Quelle 4 geladen wird. Im mittleren Teil der Abbildung ist der Zwischenkreisspannung $U_{ZK}$ ein kleiner Spannungsrippel $\Delta U_{ZK}$ überlagert. Dies ist beispielsweise bei einem geringeren Stromfluss vom Wechselrichter 1 in das Versorgungsnetz 9 bzw. die Verbraucher 10, also einer geringeren Leistungsaufnahme der Fall. Im rechten Teil der Abbildung ist der Zwischenkreisspannung $U_{ZK}$ ein großer Spannungsrippel $\Delta U_{ZK}$ überlagert. Dieser Fall tritt beispielsweise bei einem höheren Stromfluss vom Wechselrichter 1 in das Versorgungsnetz 9 bzw. die Verbraucher 10, also bei einer größeren Leistungsaufnahme, ein. Nach dem Stand der Technik würde der Spannungshub v des jeweiligen Aufwärtswandlers 2 so gewählt, dass der Sollwert $U_{ZK\_Soll}$ der Zwischenkreisspannung für alle drei Fälle, also für alle drei Größen des Spannungsrippels $\Delta U_{ZK}$ so groß ist, dass er innerhalb des zulässigen Bereichs der Zwischenkreisspannung $U_{ZK}$, also zwischen der minimalen Zwischenkreisspannung $U_{ZK\_min}$ und der maximalen Zwischenkreisspannung $U_{ZK\_max}$ liegt. Der Spannungshub v nach dem Stand der Technik würde auf einen worst case Betriebsfall ausgelegt werden und für den Spannungshub $V_1$, $V_2$ und $V_3$ in allen drei Fällen übernommen werden und somit gleich groß sein.

Fig. 5 zeigt den resultierenden Spannungshub v eines Aufwärtswandlers nach dem erfindungsgemäßen Verfahren bei den drei verschiedenen Größen des Spannungsrippels $\Delta U_{ZK}$ der Zwischenkreisspannung $U_{ZK}$ entsprechend Fig. 4. Auch hier sind die Grenzen des zulässigen Bereichs der Zwischenkreisspannung $U_{ZK}$ in Form der maximalen Zwischenkreisspannung $U_{ZK\_max}$ und der minimalen Zwischenkreisspannung $U_{ZK\_min}$ (siehe Fig. 3) der besseren Übersicht halber nicht eingezeichnet. Hier kann durch die Berücksichtigung des Spannungsrippels $\Delta U_{ZK}$ eine optimale Berechnung eines minimalen Spannungshubs v stattfinden. Im linken Teil der Figur, dem Fall, bei dem der Zwischenkreisspannung $U_{ZK}$ kein Spannungsrippel $\Delta U_{ZK}$ überlagert ist, würde das Ergebnis zu einem minimalen Spannungshub v führen, der allenfalls um einen bestimmten Spannungshub $\Delta v$ zur Berücksichtigung einer Reglerreserve erhöht werden könnte. Dennoch liegt der minimale Spannungshub $V_1$ in diesem Fall deutlich unter jenem nach dem Stand der Technik (siehe Fig. 4, linker Teil der Abbildung). Auch beim mittleren Teil des Spannungsverlaufs, bei dem der Zwischenkreisspannung $U_{ZK}$ ein kleiner Spannungsrippel $\Delta U_{ZK}$ überlagert ist, resultiert beim erfindungsgemäßen Verfahren durch die Berücksichtigung des Spannungsrippels $\Delta U_{ZK}$ ein geringerer Wert für den Spannungshub $V_2$ als beim Stand der Technik (siehe Fig. 4, mittlerer Teil der Abbildung). Erst beim rechten Teil des Spannungsverlaufs, wobei der Zwischenkreisspannung $U_{ZK}$ ein großer Spannungsrippel $\Delta U_{ZK}$ überlagert ist, resultiert beim erfindungsgemäßen Verfahren ein Spannungshub $v_3$, der jenem des Standes der Technik (siehe Fig. 4, rechter Teil der Abbildung) entspricht.

Der Vergleich der Figuren 4 und 5 zeigt deutlich den Einfluss der Berücksichtigung des Spannunsgrippels $\Delta U_{ZK}$ auf die Ermittlung des minimalen Spannungshubs v des Aufwärtswandlers 2. Während beim Stand der Technik gemäß Fig. 4 bei allen drei Fällen verschiedener Spannunsgrippel $\Delta U_{ZK}$ ein gleich großer Spannungshub v und somit eine gleich große Ausgangsspannung $U_{OUT}$ des Aufwärtswandlers 2 resultiert, kann beim erfindungsgemäßen Verfahren bei geringerem Spannunsgrippel $\Delta U_{ZK}$ der Spannungshub v reduziert werden, wodurch auch die jeweilige Ausgangsspannung

$U_{OUT}$ des Aufwärtswandlers als Sollwert $U_{ZK\_soll}$ der Zwischenkreisspannung $U_{ZK}$ verringert werden kann.

In Fig. 6 ist schematisch das minimale Tastverhältnis $D_{min}$ in Abhängigkeit des Eingangsstromes $I_{DC}$ eines Aufwärtswandlers 2 dargestellt. Beim Stand der Technik wird unabhängig vom Eingangsstrom $I_{DC}$ ein minimales Tastverhältnis $D_{min}$ des Schalters 18 des Aufwärtswandlers 2 festgelegt und der Bereich (schraffierter Bereich) oberhalb dieser Grenze für die Regelung des Aufwärtswandlers 2 verwendet. Das minimale Tastverhältnis $D_{min}$ hängt von der parasitären Kapazität 21 des Schalters 18 ab. Ab einem gewissen minimalen Eingangsstrom $I_{DC\_min}$ kann mit dem minimalen Tastverhältnis $D_{min}$ keine Regelung des Aufwärtswandlers 2 mehr stattfinden, weshalb unterhalb dieses minimalen Eingangsstroms $I_{DC\_min}$ kein Betrieb des Aufwärtswandlers 2 möglich ist.

In Fig. 7 ist schematisch das minimale Tastverhältnis $D_{min}$ in Abhängigkeit des Eingangsstromes $I_{DC}$ eines Aufwärtswandlers 2 beim erfindungsgemäßen Verfahren dargestellt. Je nach Größe des Eingangsstroms $I_{DC}$ des Aufwärtswandlers 2 wird die minimale Schaltzeit des Schalters 18 aufgrund seiner parasitären Kapazität 21 verändert. Bei einem kleineren Eingangsstrom $I_{DC}$ muss das minimale Tastverhältnis $D_{min}$ des Aufwärtswandlers 2 angehoben werden, wohingegen bei höherem Eingangsstrom $I_{DC}$ eine Absenkung des minimalen Tastverhältnisses $D_{min}$ stattfinden muss. Dadurch kann in bestimmten Fällen, beispielsweise in den Morgenstunden bei einem Photovoltaik-Modul als DC-Quelle 4 mit einem geringeren Eingangsstrom $I_{DC}$ eine optimale Anpassung des Spannungshubs v des Aufwärtswandlers 2 durch Anpassung des minimalen Tastverhältnisses $D_{min}$ erfolgen und bei geringeren Eingangsströmen $I_{DC}$ mit einem erhöhten minimalen Tastverhältnis $D_{min}$ ein Betrieb und eine Regelung des Aufwärtswandlers 2 stattfinden. Dementsprechend kann der Betriebsbereich (schraffierter Bereich) des Aufwärtswandlers 2 vergrößert werden.

**Patentansprüche**

1. Verfahren zum Betreiben eines Wechselrichters (1) zur Umwandlung einer Gleichspannung ($U_{DC}$) in eine Wechselspannung ($U_{AC}$), mit zumindest einem durch einen Aufwärtswandler (2) gebildeten DC/DC-Wandler zur Umwandlung einer am DC-Eingang (3) des Aufwärtswandlers (2) anliegenden Eingangsspannung ($U_{IN}$) einer DC-Quelle (4) in eine um einen Spannungshub ($v=U_{OUT}/U_{IN}$) höhere Ausgangsspannung ($U_{OUT}$), einem mit den Ausgangsspannungen ($U_{OUT}$) aller Aufwärtswandler (2) gespeisten Zwischenkreis (5) mit einem Zwischenkreiskondensator ($C_{ZK}$), einem DC/AC-Wandler (6) und einem AC-Ausgang (8) zur Verbindung mit einem Versorgungsnetz (9) und bzw. oder Verbrauchern (10), wodurch der Zwischenkreisspannung ($U_{ZK}$) am Zwischenkreiskondensator ($C_{ZK}$) ein Spannungsrippel ($\Delta U_{ZK}$) überlagert wird, wobei in jedem Aufwärtswandler (2) mit zumindest einer Drossel (17), einem Schalter (18), einer Diode (19) und einem Ausgangskondensator (20) der Schalter (18) über eine Steuereinrichtung (11) mit einer bestimmten Schaltfrequenz ($f_s$) und einem bestimmten Tastverhältnis (D) ein- und ausgeschaltet wird, sodass die Ausgangsspannung ($U_{OUT}$) jedes Aufwärtswandlers (2) einem zwischen einer maximalen Zwischenkreisspannung ($U_{ZK\_max}$) und einer minimalen Zwischenkreisspannung ($U_{ZK\_min}$) liegenden Sollwert der Zwischenkreisspannung ($U_{ZK\_Soll}$) entspricht, **dadurch gekennzeichnet, dass** die Eingangsspannung ($U_{IN}$) jedes Aufwärtswandlers (2) und die Zwischenkreisspannung ($U_{ZK}$) samt Spannungsrippel ($\Delta U_{ZK}$) gemessen wird, und ein minimaler Spannungshub (v) jedes Aufwärtswandlers (2) in Abhängigkeit der gemessenen Eingangsspannung ($U_{IN}$) und des Spannungsrippels ($\Delta U_{ZK}$) dynamisch berechnet und der Sollwert der Zwischenkreisspannung ($U_{ZK\_Soll}$) minimiert wird.

2. Verfahren nach Anspruch 1, **dadurch gekennzeichnet, dass** der Schalter (18) jedes Aufwärtswandlers (2) über die Steuereinrichtung (11) unter Berücksichtigung eines vorgegebenen minimalen Tastverhältnisses ($D_{min}$) mit der bestimmten Schaltfrequenz ($f_s$) und dem bestimmten Tastverhältnis (D) ein- und ausgeschaltet wird.

3. Verfahren nach Anspruch 2, **dadurch gekennzeichnet, dass** der Spannungshub (v) jedes Aufwärtswandlers (2) nach der Gleichung

$$v = 1/(1-D_{min}) + \Delta U_{ZK}/2.U_{IN}$$

dynamisch berechnet wird.

4. Verfahren nach einem der Ansprüche 1 bis 3, **dadurch gekennzeichnet, dass** der berechnete Spannungshub (v) jedes Aufwärtswandlers (2) um einen definierten Wert ($\Delta v$) erhöht wird.

5. Verfahren nach Anspruch 2 bis 4, **dadurch gekennzeichnet, dass** der Eingangsstrom ($I_{Dc}$) jedes Aufwärtswandlers (2) gemessen wird, und das minimale Tastverhältnis ($D_{min}$) des Schalters (12) jedes Aufwärtswandlers (2) in Abhängigkeit des gemessenen Eingangsstromes ($I_{Dc}$) geändert wird.

6. Verfahren nach einem der Ansprüche 1 bis 5, **dadurch gekennzeichnet, dass** die Eingangsspannung ($U_{IN}$) jedes Aufwärtswandlers (2) und die Zwischenkreisspannung ($U_{ZK}$) samt Spannungsrippel ($\Delta U_{ZK}$) und allenfalls der Strom ($I_{re}$) durch die Drossel (17) mit einer Abtastfrequenz ($f_A$), welche einem Vielfachen der Netzfrequenz ($f_N$) der Wechselspannung ($U_{AC}$) entspricht, gemessen und daraus der Spannungshub (v) und allenfalls das minimale Tastverhältnis ($D_{min}$) berechnet wird.

7. Verfahren nach einem der Ansprüche 1 bis 6, **dadurch gekennzeichnet, dass** jeder Aufwärtswandler (2) bidirektional ausgeführt und als Abwärtswandler zur Umwandlung der Ausgangsspannung ($U_{OUT}$) in eine kleinere Eingangsspannung ($U_{IN}$) verwendet wird.

8. Wechselrichter (1) zur Umwandlung einer Gleichspannung ($U_{DC}$) in eine Wechselspannung ($U_{AC}$), mit zumindest einem durch einen Aufwärtswandler (2) gebildeten DC/DC-Wandler zur Umwandlung einer am DC-Eingang (3) des Aufwärtswandlers (2) anliegenden Eingangsspannung ($U_{IN}$) einer DC-Quelle (4) in eine höhere Ausgangsspannung ($U_{OUT}$) mit einem Spannungshub ($v=U_{OUT}/U_{IN}$), einem mit den Ausgangsspannungen ($U_{OUT}$) aller Aufwärtswandler (2) gespeisten Zwischenkreis (5) mit einem Zwischenkreiskondensator ($C_{ZK}$), einem DC/AC-Wandler (6) und einem AC-Ausgang (8) zur Verbindung mit einem Versorgungsnetz (9) und bzw. oder Verbrauchern (10), wodurch der Zwischenkreisspannung ($U_{ZK}$) am Zwischenkreiskondensator ($C_{ZK}$) ein Spannungsrippel ($\Delta U_{ZK}$) überlagerbar ist, wobei jeder Aufwärtswandler (2) eine Drossel (17), einen Schalter (18), eine Diode (19) und einen Ausgangskondensator (20) aufweist, und mit einer Steuereinrichtung (11), die zum Ein- und Ausschalten des Schalters (18) jedes Aufwärtswandlers (2) mit einer bestimmten Schaltfrequenz ($f_s$) und einem bestimmten Tastverhältnis (D) ausgebildet ist, sodass die Ausgangsspannung ($U_{OUT}$) jedes Aufwärtswandlers (2) einem zwischen einer maximalen Zwischenkreisspannung ($U_{ZK\_max}$) und einer minimalen Zwischenkreisspannung ($U_{ZK\_min}$) liegenden Sollwert der Zwischenkreisspannung ($U_{ZK\_soll}$) entspricht, **dadurch gekennzeichnet, dass** eine Spannungsmesseinrichtung (22) zur Messung der Eingangsspannung ($U_{IN}$) jedes Aufwärtswandlers (2) und eine Spannungsmesseinrichtung (23) zur Messung der Zwischenkreisspannung ($U_{ZK}$) samt Spannungsrippel ($\Delta U_{ZK}$) vorgesehen ist, und dass die Steuereinrichtung (11) zur dynamischen Berechnung eines minimalen Spannungshubs (v) jedes Aufwärtswandlers (2) in Abhängigkeit der gemessenen Eingangsspannung ($U_{IN}$) und des gemessenen Spannungsrippels ($\Delta U_{ZK}$) und zur Minimierung des Sollwerts der Zwischenkreisspannung ($U_{ZK\_soll}$) ausgebildet ist.

9. Wechselrichter (1) nach Anspruch 8, **dadurch gekennzeichnet, dass** die Steuereinrichtung (11) zum Ein- und Ausschalten des Schalters (18) jedes Aufwärtswandlers (2) mit der bestimmten Schaltfrequenz ($f_s$) und dem bestimmten Tastverhältnis (D) unter Berücksichtigung eines vorgegebenen minimalen Tastverhältnisses ($D_{min}$) ausgebildet ist.

10. Wechselrichter (1) nach Anspruch 9, **dadurch gekennzeichnet, dass** die Steuereinrichtung (11) zur dynamischen Berechnung des Spannungshubs (v) jedes Aufwärtswandlers (2) nach der Gleichung

$$v = 1/(1-D_{min}) + \Delta U_{ZK}/2.U_{IN}$$

ausgebildet ist.

11. Wechselrichter (1) nach einem der Ansprüche 8 bis 10, **dadurch gekennzeichnet, dass** die Steuereinrichtung (11) zur Erhöhung des berechneten Spannungshubs (v) jedes Aufwärtswandlers (2) um einen definierten Wert ($\Delta v$) ausgebildet ist.

12. Wechselrichter (1) nach einem der Ansprüche 9 bis 11, **dadurch gekennzeichnet, dass** eine Strommesseinrichtung (24) zur Messung des Eingangsstroms ($I_{DC}$) jedes Aufwärtswandlers (2) vorgesehen ist, und dass die Steuereinrichtung (11) zur Änderung des minimalen Tastverhältnisses ($D_{min}$) des Schalters (18) jedes Aufwärtswandlers (2) in Abhängigkeit des gemessenen Eingangsstromes ($I_{DC}$) ausgebildet ist.

13. Wechselrichter (1) nach einem der Ansprüche 8 bis 12, **dadurch gekennzeichnet, dass** die Spannungsmesseinrichtung (22) zur Messung der Eingangsspannung ($U_{IN}$) jedes Aufwärtswandlers (2), die Spannungsmesseinrichtung (23) zur Messung der Zwischenkreisspannung ($U_{ZK}$) samt Spannungsrippel ($\Delta U_{ZK}$) und allenfalls die Strommesseinrichtung (24) zur Messung des Eingangsstroms ($I_{Dc}$) jedes Aufwärtswandlers (2) zur Erfassung von Messwerten mit einer Abtastfrequenz ($f_A$), welche einem Vielfachen der Netzfrequenz ($f_N$) der Wechselspannung ($U_{AC}$) entspricht, und daraus zur Berechnung des Spannungshubs (v) und allenfalls des minimalen Tastverhältnisses ($D_{min}$) ausgebildet ist.

14. Wechselrichter (1) nach einem der Ansprüche 8 bis 13, **dadurch gekennzeichnet, dass** die DC-Quelle (4) durch ein Photovoltaik-Modul (13), einen Windgenerator (14) und bzw. oder eine Batterie (15) gebildet ist.

15. Wechselrichter (1) nach einem der Ansprüche 8 bis 14, **dadurch gekennzeichnet, dass** jeder Aufwärtswandler (2) bidirektional ausgeführt ist.

FIG. 1

EP 3 886 305 A1

$I_{DC}$

$U_{IN}$

$U_{OUT}$

**FIG. 2**

$U_{OUT} = v \cdot U_{IN}$

$U_{ZK}$

$U$

$U_{ZK\_max}$

$U_{ZK\_mean}$
$= U_{ZK\_soll}$

$U_{ZK\_min}$

$U_{IN}$

$\Delta U_{ZK}$

$v$

$t$

**FIG. 3**

FIG. 4

FIG. 5

FIG. 6

FIG. 7

**Europäisches Patentamt**
**European Patent Office**
**Office européen des brevets**

# EUROPÄISCHER RECHERCHENBERICHT

Nummer der Anmeldung

EP 20 16 5328

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | US 2010/157632 A1 (BATTEN ROBERT D [US] ET AL) 24. Juni 2010 (2010-06-24)<br>* Absätze [0053], [0046], [0054], [0069], [0071], [0072], [0075], [0078], [0081], [0082], [0084], [0119], [0134]; Abbildungen 1,2,8,11,12,17,18,37-42 *<br>----- | 1,2,4-9, 11-15<br>3,10 | INV.<br>H02M1/42<br>H02M3/156<br>H02M3/158<br>H02M7/48<br>H02M1/00 |
| A | DE 10 2016 220204 A1 (CONTINENTAL AUTOMOTIVE GMBH [DE]) 19. April 2018 (2018-04-19)<br>* Absatz [0032]; Abbildung 2 *<br>----- | 3,10 | |

**RECHERCHIERTE SACHGEBIETE (IPC)**

H02M

Der vorliegende Recherchenbericht wurde für alle Patentansprüche erstellt

| Recherchenort | Abschlußdatum der Recherche | Prüfer |
|---|---|---|
| Den Haag | 16. Juli 2020 | Kanelis, Konstantin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 16 5328

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-07-2020

| Im Recherchenbericht angeführtes Patentdokument | Datum der Veröffentlichung | Mitglied(er) der Patentfamilie | Datum der Veröffentlichung |
|---|---|---|---|
| US 2010157632 A1 | 24-06-2010 | KEINE | |
| DE 102016220204 A1 | 19-04-2018 | CN 109804540 A<br>DE 102016220204 A1<br>US 2019245441 A1<br>WO 2018073015 A1 | 24-05-2019<br>19-04-2018<br>08-08-2019<br>26-04-2018 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2375552 A1